# EUROPÄISCHE PATENTANMELDUNG

(11) **EP 2 930 887 A1**
(43) Veröffentlichungstag der Anmeldung: **14.10.2015**
(21) Anmeldenummer: 15162326.1
(22) Anmeldetag: 02.04.2015
(51) Int. Cl.: H04L 12/28

(54) **SIGNALKONVERTER**

(30) Priorität: 11.04.2014 DE 102014206999
(71) Anmelder: ROBERT BOSCH GMBH, 70442 Stuttgart (DE)
(72) Erfinder: Kalk, Hendrik Johannes, 7421AZ Deventer (NL)

(57) **Zusammenfassung**

Die Erfindung betrifft ein Signalkonverter (1) für ein Heimautomatisierungssystem und/oder HVAC-Systeme, wobei der Signalkonverter (1) Signale (20, 22) basierend auf mindestens einem Übertragungsprotokoll verarbeiten, insbesondere senden und empfangen, kann, wobei der Signalkonverter (1) erste Signale (20, 22) basierend auf einem ersten Übertragungsprotokoll in zweite Signale (20, 22) basierend auf einem zweiten Übertragungsprotokoll konvertiert und umgekehrt. Es wird vorgeschlagen, dass der Signalkonverter (1) ein Erkennungsmittel (25) aufweist, das automatisch das Übertragungsprotokoll der ersten Signale (20, 22) und das Übertragungsprotokoll der zweiten Signale (20, 22) erkennt.

## Beschreibung

### Stand der Technik

Die Erfindung betrifft ein Signalkonverter für eine Heimautomatisierungssystem und/oder HVAC-System nach Gattung der unabhängigen Ansprüche.

Aufgrund vieler unterschiedlicher Heimautomatisierungssystem und/oder HVAC-System kommt es zu Inkompatibilität zwischen den einzelnen Systemkomponenten. Systemkomponenten sind insbesondere Steuerungseinrichtungen und/oder Aktoreinrichtungen. Viele Systemkomponenten weisen eigene individuelle Übertragungsprotokolle auf. Basierend auf dem Übertragungsprotokoll kommunizieren die Systemkomponenten mit weiteren Systemkomponenten, die das gleiche Übertragungsprotokoll verwenden. Eine Kommunikation zwischen den Systemkomponenten ist nicht möglich wenn sich die Übertragungsprotokolle der Systemkomponenten unterscheiden.

Es ist schon ein Signalkonverter bekannt, der erste Signale basierend auf einem ersten Übertragungsprotokoll und Signale basierend auf einem zweiten Übertragungsprotokoll verarbeiten, insbesondere senden und empfangen, kann. Weiterhin ist bekannt, dass der Signalkonverter erste Signale basierend auf einem ersten Übertragungsprotokoll in zweite Signale basierend auf einem zweiten Übertragungsprotokoll konvertiert.

### Offenbarung der Erfindung

Der erfindungsgemäße Signalkonverter mit den Merkmalen des Hauptanspruchs hat den Vorteil, dass die von den Systemkomponenten für die Kommunikation eingesetzten Übertragungsprotokolle automatisch erkannt werden. Durch die automatische Erkennung der Übertragungsprotokolle können Kosten und Zeitaufwand für die Einrichtung/Installation weiterer Systemkomponenten gesenkt werden.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist, dass der Signalkonverter ein Konvertierungsmittel aufweist, welches die Konvertierung der Signale entsprechend der erkannten Übertragungsprotokolle automatisch durchführt. Der Signalkonverter, insbesondere das Konvertierungsmittel des Signalkonverters erkennt automatisch die verwendeten Übertragungsprotokolle der empfangenen Signale. Der Signalkonverter, insbesondere das Konvertierungsmittel des Signalkonverters konvertiert, bzw. übersetzt die Signale basierend auf einem ersten Übertragungsprotokoll in Signale basierend auf einem zweiten Übertragungsprotokoll und/oder einem dritten Übertragungsprotokoll usw..

Die Signale werden vorteilhaft nur in Signale basierend auf einem Übertragungsprotokolle konvertiert, auf dessen Basis der Signalkonverter, insbesondere das Konvertierungsmittel des Signalkonverters bereits Signale empfangen hat und /oder die automatisch ermittelt wurden. Somit wird ein Signal vorteilhaft nur auf Basis verwendeter Übertragungsprotokolle konvertiert. Es ist somit möglich Ressourcen einzusparen und die Konvertierung zu beschleunigen.

Vorteilhaft ist, dass der Signalkonverter ein Kommunikationsmittel aufweist, das Signale basierend auf den erkannten Übertragungsprotokollen empfangen und senden kann. Der Signalkonverter, insbesondere das Kommunikationsmittel des Signalkonverters kann Signale basierend auf den automatisch erkannten Übertragungsprotokollen generieren und senden. Ferner kann er empfangene Signale dekodieren, bzw. entschlüsseln und die Information auslesen und vorzugsweise verarbeiten.

In einer bevorzugten Ausgestaltung ist der Signalkonverter drahtgebunden und/oder drahtlos mit mindestens einer Systemkomponente verbunden. Systemkomponenten umfassen insbesondere Steuerungseinrichtung und Aktorsysteme, die vorzugsweise Teil eines Heimautomatisierungssystems und/oder eines HVAC-Systems sind. Die Systemkomponenten sind mit dem Signalkonverter verbunden und kommunizieren mittels Signalen, die auf einem Übertragungsprotokoll basieren mit dem Signalkonverter.

Gemäß einer bevorzugten Weiterbildung weist der Signalkonverter, insbesondere das Kommunikationsmittel des Signalkonverters mindestens eine Schnittstelle je Übertragungsprotokoll auf. Der Signalkonverter sendet und empfängt über die Schnittstellen Signale, insbesondere basierend auf einem Übertragungsprotokoll, welches der Signalkonverter durch automatische Erkennung der Schnittstelle zugeordnet hat. Die Schnittstelle stellt eine drahtgebundene oder drahtlose Verbindung zu mindestens einer Systemkomponente her. Der Signalkonverter weist jeder Schnittstelle automatisch ein Übertragungsprotokoll zu. Alle Signale die über die Schnittestelle gesendet oder empfangen werden, werden basierend auf dem Übertragungsprotokoll der Schnittstelle generiert oder dekodiert.

Eine vorteilhafte Weiterbildung zeichnet sich dadurch aus, dass der Signalkonverter über die Schnittstelle mit einem Steuerungs- und/oder Kommunikationsbus verbunden ist. Der Signalkonverter überträgt die Signale über den Steuerungs- und/oder Kommunikationsbus. Der Steuerungs- und/oder Kommunikationsbus ermöglicht das gleichzeitige Senden der Signale an alle Systemkomponenten die mit dem Bus verbunden sind (Broadcasting). Vorteilhaft kann mittels Adressierung der Signale auch mit ausgewählte Systemkomponenten kommunizier werden.

Eine Weiterbildung ist, dass das Übertragungsprotokoll der Signale von dem Steuerungs- und/oder Kommunikationsbus abhängig ist. Dadurch ist das Übertragungsprotokoll bestmöglich an den Steuerungs- und/oder Kommunikationsbus angepasst.

Gemäß einer weiteren Ausführungsform handelt es sich bei einem Teil der Signale um Steuersignale, zur Steuerung einer Systemkomponente, insbesondere eines Aktorsystems. Die Steuersignale werden von Steuerungseinrichtungen erzeugt und sollen die Aktorsysteme steuern. Durch den Signalkonverter kann das Aktorsystem von beliebig vielen Steuerungseinrichtungen gesteuert werden.

Gemäß einer weiteren Ausführungsform handelt es sich bei den Signalen um Kommunikationssignale, insbesondere zur Übermittelung von Informationen von ersten Systemkomponente zu einer zweiten Systemkomponente und umgekehrt. Durch den Signalkonverter und die gesendeten und empfangenen Informationssignale kann insbesondere der Zustand oder der Status einzelner Systemkomponenten auch über die Übertragungsprotokollgrenzen hinaus kommuniziert werden.

Besonders vorteilhaft ist, dass der Signalkonverter, insbesondere optisch oder akustisch, signalisiert wenn ein Übertragungsprotokoll erkannt wurde. Durch die Signalisierung wird dem Techniker oder Anwender mitgeteilt, dass die übertragungsprotokolle erkannt wurden und der Signalkonverter einsatzbereit ist. Somit lässt sich ein erfindungsgemäßer Signalkonverter sehr einfach installieren, bzw. integrieren.

Bevorzugterweise ermittelt der Signalkonverter die Version der Übertragungsprotokolle. Nachdem der Signalkonverter die Version des Übertragungsprotokolls erkannt hat, erfolgt die Konvertierung abhängig von dem Übertragungsprotokoll.

Der Signalkonverter ermöglicht eine Kommunikation zwischen Systemkomponenten, insbesondere mittels Signalen, die abhängig von der Systemkomponente auf unterschiedlichen Übertragungsprotokollen basieren. Im Folgenden wird die Erfindung anhand von Figuren beschrieben. Die Figuren sind lediglich beispielhaft und schränken den allgemeinen Erfindungsgedanken nicht ein. Es zeigen:
- Figur 1 als Blockschaltbild die Anordnung eines Signalkonverters, einer ersten Systemkomponente und einer zweiten Systemkomponente,
- Figur 2 den Ablauf einer Konvertierung eines ersten Signals basierend auf einem ersten Übertragungsprotokoll in ein zweites Signal basierend auf einem zweiten Übertragungsprotokoll,
- Figur 3 und Figur 4 Ablaufdiagramme für die automatische Erkennung der verwendeten Übertragungsprotokolle und
- Figur 5 mehrere Systemkomponenten die über einen Signalkonverter miteinander verbunden sind, insbesondere kommunizieren.

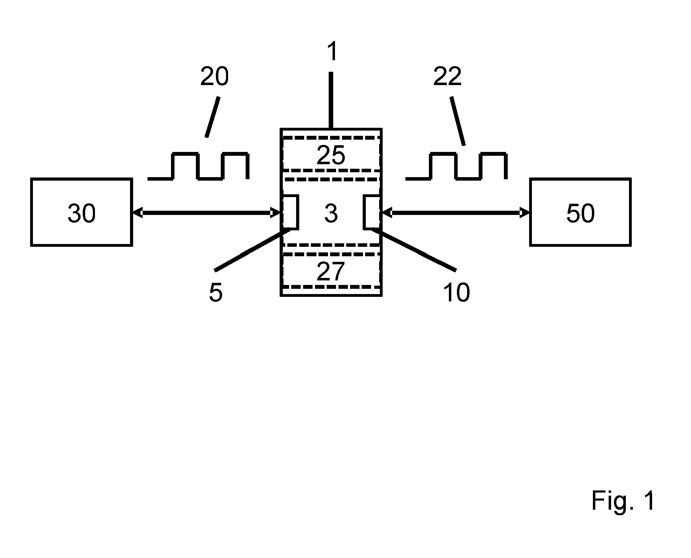

In Figur 1 ist schematisch die Anordnung eines erfindungsgemäßen Signalkonverters 1 zwischen einer ersten Systemkomponente 30 und einer zweiten Systemkomponente 50 dargestellt. Die erste Systemkomponente 30, die zweite Systemkomponente 50 und der Signalkonverter 1 können insbesondere Teil einer Heimautomatisierungssystem, bzw. eines Heiminformationssystems und oder eines HVAC Systems sein. Die Systemkomponenten 30, 50 umfassen Steuerungseinrichtung und Aktorsysteme.

Steuerungseinrichtung sind insbesondere Benutzerschnittstellen, Sensoren oder Steuerungssysteme.

Die Benutzerschnittstellen ermöglichen es dem Benutzer, bzw. dem Techniker mit den weiteren Systemkomponenten 30, 50 zu interagieren, bzw. zu kommunizieren. Die Benutzerschnittstellen ermöglichen beispielsweise das Senden von Anweisungen oder das Empfangen von Statusinformationen an und/oder von einer Systemkomponente 30, 50. Beispiele für Benutzerschnittstellen sind Schalter, Taster, Touchscreens, Tablets, Smartphones und Computer, aber auch Softwarelösungen, insbesondere Applikationen, die eine Kommunikation mit dem weiteren Systemkomponenten ermöglichen und auf modernen informationsverarbeitenden Geräten, beispielswiese Smartphone, Smartwatchs, Tablets oder PC ausgeführt werden. Die Benutzerschnittstellen ermöglichen eine Darstellung des Systemzustands mindestens einer Systemkomponente 30, 50 sowie ein Steuern von Systemkomponenten 30, 50. Hierzu bieten Benutzerschnittstellen abhängig von ihrer Komplexität, dem benötigten Funktionsumfang und ihrer Art die Möglichkeit Kommunikationssignale und/oder Steuerungsbefehle abzusenden und Statusinformationen zu empfangen.

Ein weiteres Beispiel für Systemkomponenten 30, 50, bzw. Steuerungseinrichtungen sind Sensor. Sensoren bilden eine Möglichkeit die Umgebung zu erfassen und entsprechend auf Veränderungen in der Umgebung zu reagieren und abhängig von der Art der Änderung weitere Systemkomponenten 30, 50 zu steuern oder informieren. Beispiele für Sensoren sind Temperatur-, Luftfeuchtigkeits-, Luftdruck-, Rauchmelde-, Bewegungsmelde-, Neigungssensor-, Beschleunigungs-, Regen-, Gas-, UV-, Licht-, Lautstärken-, Füllstands- oder Anwesenheitserkennungssensoren.

Steuerungssysteme ermöglichen die intelligente Weiterverarbeitung von Signale von Systemkomponenten 30, 50, insbesondere Steuerungssysteme, wie Sensoren und/oder Benutzerschnittstellen oder Aktorsysteme, wie HVAC Vorrichtungen. Sie empfangen die Signale und erzeugen abhängig von hinterlegten Steuerungsmethoden und Variablen neue Signale, insbesondere Kommunikationssignale, vorzugsweise Steuerungssignale oder Informationssignale.

Weitere Systemkomponenten 30, 50 sind Aktorsysteme, wie beispielsweise Heating, Ventilation and Air Conditioning Systeme, kurz HVAC, Schaltbare Steckdosen, Rollladenmotoren, Garagentoröffner, oder Relais. Heizungsanlagen erzeugen Wärme zur Erwärmung von Gebäuderäumlichkeiten. Heizungsanlagen sind in beinahe jedem Gebäude anzufinden und dienen dazu einem Gebäude Wärmeenergie zuzuführen. Die Heizung erzeugt die Wärmeenergie entweder selbst, insbesondere durch Umwandlung einer anderen Energieform, beispielsweise chemischer Energie, vorzugsweise Gas, Heizöl, Kohle oder Holz oder elektrischer Energie in Wärmeenergie. Heizungen können jedoch Wärme auch aus der Umgebung oder aus Abwärme entnehmen. Beispielsweise beziehen Wärmepumpenheizungen ihre Wärmeenergie aus ihrer Umgebung und teilweise aus elektrischer Energie. Abwärmeanlagen entziehen der abströmenden Gebäudeluft oder den warmen Abgasen die Wärme und verwenden diese Energie zur Erwärmung des Gebäudes.

Klimaanlagen erzeugen ein gleichmäßiges Raumklima. Klimaanlagen erzeugen und halten in einem Raum die Temperatur, Feuchtigkeit und Luftqualität. Klimaanlagen können insbesondere den Raum aufwärmen, aber auch abkühlen. Klimaanlagen werden auch häufig zu Raumtemperierung bei Technikräumen, insbesondere Severräumen eingesetzt. Die Klimaanlage stellt insbesondere eine Systemkomponente 50 dar. Die Benutzerschnittstelle der Klimaanlage stellt insbesondere eine Systemkomponente 30 dar. Durch einen erfindungsgemäßen Signalkonverter 1 können die Systemkomponenten 30, 50 der Klimaanlage mit weiteren Systemkomponenten insbesondere einer Heizungsanlage kommunizieren und umgekehrt. Es ist somit möglich die Systemkomponenten einzelner HVAC-Systeme und/oder Heimautomatisierungssystem (Smart Home Komponenten) mit unterschiedlichen Übertragungsprotokollen miteinander kommunizieren, insbesondere sich gegenseitig steuern zu lassen.

Die in Figur 1 schematische dargestellte Systemkomponente 30 ist beispielhaft eine Steuerungseinrichtung. Die zweite Systemkomponente 50 ist beispielhaft eine HVAC Vorrichtung, insbesondere ein Klimagerät. Die beiden Systemkomponenten 30, 50 sind über den erfindungsgemäßen Signalkonverter miteinander verbunden, bzw. kommunizieren über den Signalkonverter 1 miteinander. Der Signalkonverter 1 weist ein Kommunikationsmittel 3 auf. Der Signalkonverter 1, insbesondere das Kommunikationsmittel 3 des Signalkonverters 1 weist insbesondere mindestens eine erste Schnittstelle 5 und eine zweite Schnittstelle 10 auf. Der Signalkonverter 1 kommuniziert über jede Schnittstelle 5, 10 mit mindestens einem Übertragungsprotokoll. Der Signalkonverter 1 weist, insbesondere das Kommunikationsmittel 3 des Signalkonverters 1 nach der automatischen Ermittlung des Übertragungsprotokolls, das ermittelte Übertragungsprotokoll der entsprechenden Schnittstelle 5, 10 zu. Für die automatische Ermittlung des Übertragungsprotokolls weist der Signalkonverter 1 insbesondere ein Erkennungsmittel 25 auf.

Erfindungsgemäß muss eine Schnittstelle nicht als separate Hardwareschnittstelle, bspw. einen separaten Stecker oder Dose ausgeführt sein. Vielmehr können beliebig viele Schnittstellen 5, 10 an einer Hardwareschnittstelle ausgebildet sein, bzw. die gleichen Signalleitungen oder Frequenzbereich, wie beispielsweise Bluetooth oder WLAN verwenden. Über die erste Schnittstelle 5 ist die erste Systemkomponente 30 mit dem Signalkonverter 1, insbesondere dem Kommunikationsmittel 3 des Signalkonverters 1 verbunden. Über die zweite Schnittstelle 10 ist die zweite Systemkomponente 50 mit dem Signalkonverter 1 verbunden.

Ferner weist der Signalkonverter 1 ein Konvertierungsmittel 27 auf. Sendet die erste Systemkomponente 30 insbesondere ein erstes Signal 20 an den Signalkonverter 1, so empfängt der Signalkonverter 1 das erste Signal 20 über die erste Schnittstelle 5. Die erste Systemkomponente 30 sendet das erste Signal 20 basierend auf einem ersten Übertragungsprotokoll. Der Signalkonverter 1, insbesondere das Konvertierungsmittel 27 des Signalkonverters 1 konvertiert, bzw. wandelt das erste Signal 20 in ein zweites Signal 22 basierend auf einem zweiten Übertragungsprotokoll um und der Signalkonverter 1, insbesondere das Kommunikationsmittel 3 des Signalkonverters 1 sendet das zweite Signal 22 an die zweite Systemkomponente 50. Das zweite Signal 22 wird über die zweite Schnittstelle 10 an die Systemkomponente 50 gesendet. Die zweite Systemkomponente 50 verarbeitet das Signal 22. In die umgekehrte Richtung funktioniert der Signalkonverter 1, bzw. das Konvertierungsmittel 27 gleich. Die zweite Systemkomponente 50 sendet ein zweites Signal 22 an den Signalkonverter 1, insbesondere das Kommunikationsmittel 3 des Signalkonverters 1. Der Signalkonverter 1, insbesondere das Kommunikationsmittel 3 des Signalkonverters 1 empfängt das zweite Signal 22 an seiner zweiten Schnittstelle 10. Das zweite Signal 22 wurde basierend auf dem zweiten Übertragungsprotokoll erzeugt. Der Signalkonverter 1, insbesondere das Konvertierungsmittel 27 des Signalkonverters 1 konvertiert das zweite Signal 22 in ein erstes Signal 20 und sendet dieses an die erste Systemkomponente 30. Erfindungsgemäß kann der Signalkonverter 1, insbesondere das Kommunikationsmittel 3 des Signalkonverters 1 um beliebig viele Schnittstellen 5, 10, denen jeweils ein Übertragungsprotokoll zugeordnet ist, erweitert werden.

Der Signalkonverter 1, insbesondere das Kommunikationsmittel 3 des Signalkonverters 1 ermöglicht somit die Kommunikation zwischen beliebig vielen Systemkomponenten 30, 50, die mit dem Signalkonverter 1 drahtlos oder drahtgebunden verbunden sind.

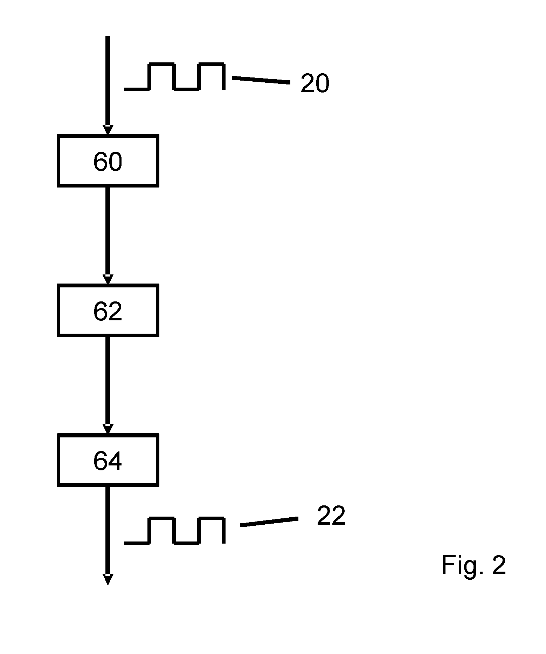

Figur 2 zeigt den Ablauf bei der Konvertierung der Signale 20, 22 im Signalkonverter 1. In Schritt 60 empfängt der Signalkonverter 1, bzw. das Kommunikationsmittel 3 des Signalkonverter 1 ein erstes Signal 20. Das erste Signal 20 wurde basierend auf einem ersten Übertragungsprotokoll erzeugt. In Schritt 62 wird die Information des ersten Signals 20 basierend auf dem ersten Übertragungsprotokoll ermittelt, bzw. entschlüsselt, insbesondere dekodiert. Anschließend wird in Schritt 64 ein neues zweites Signal 22 generiert. Das neue zweite Signal 22 umfasst die gleiche Information wie das erste Signal 20. Die Information wurde jedoch entsprechende des zweiten Übertragungsprotokolls in ein neues zweites Signal 22 basierend auf dem zweiten Übertragungsprotokoll umgewandelt, insbesondere konvertiert. Das zweite Signal 22 wird anschließend an alle oder speziell die adressierte Systemkomponente 30, 50, insbesondere durch das Kommunikationsmittel 3 versendet.

Systemkomponenten von Aktorsysteme, wie HVAC Systeme kommunizieren insbesondere drahtgebunden, vorzugsweise über Bussysteme, beispielsweise dem EMS Bus, dem iRT Bus und weitere Busse miteinander. Jeder Bus weist ein eigenes Übertragungsprotokoll auf. Basierend auf dem Übertragungsprotokoll erfolgt die Kommunikation, insbesondere die Generierung von Signalen.

Moderne Steuerungssysteme, wie Tablets, Smartphones, Funkschalter kommunizieren dagegen meist drahtlos Kommunikationsverbindungen wie beispielsweise WLAN, ZIGBee, Bluetooth, Funk oder Infrarot. Und auch bei drahtlosen Kommunikationsverbindungen werden die Signale abhängig von den Übertragungsprotokollen erzeugt.

Erfindungsgemäß erkennt der Signalkonverter 1 automatisch das Übertragungsprotokoll der mit ihm verbundenen Systemkomponenten 30, 50. Der Signalkonverter 1 wird hierzu mit den Systemkomponenten 30, 50 verbunden.

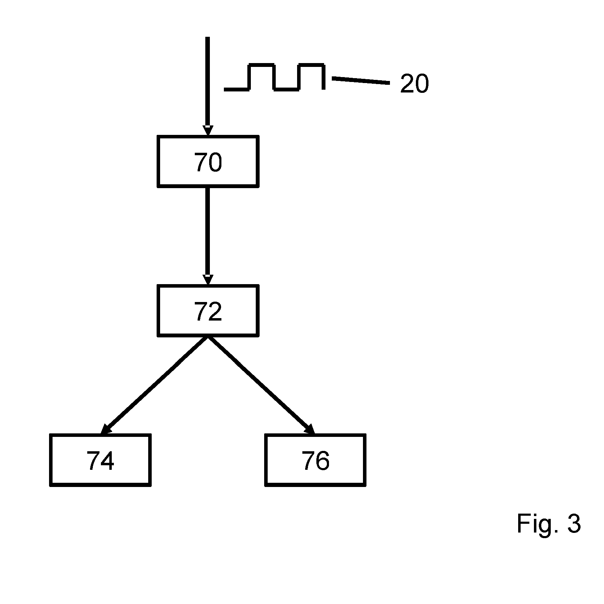

In Figur 3 ist ein Ablaufdiagramm für die automatische Erkennung der Übertragungsprotokolle, insbesondere durch das Erkennungsmittel 25 des Signalkonverters 1 dargestellt. In einem ersten Schritt 70 empfängt der Signalkonverter 1, insbesondere das Kommunikationsmittel 3 des Signalkonverters 1 ein erstes Signal 20 an einer ersten Schnittstelle 5. Der Signalkonverter 1, insbesondere. das Erkennungsmittel 25 des Signalkonverters 1 weist insbesondere einen Speicher, insbesondere eine Datenbank, vorzugsweise eine Tabelle mit den ihm bekannten Übertragungsprotokollen und Signalen auf.

Gemäß einer weiteren Ausführungsform sind in dem Signalkonverter 1, bzw. das Erkennungsmittel 25 des Signalkonverters 1 Verfahrensabläufe, insbesondere Funktionen, vorzugsweise Algorithmen zur Generierung von Signalen sowie zur Erkennung der Informationen eines Signals hinterlegt. In Schritt 72 analysiert der Signalkonverter 1, insbesondere das Erkennungsmittel 25 des Signalkonverters 1, beispielsweise durch den Vergleich des empfangen Signale mit den Daten in seinem Speicher oder durch die hinterlegten Funktion auf welchem Übertragungsprotokoll das Signal basiert. Hat der Signalkonverter 1 ein Übertragungsprotokoll erkannt signalisiert er das dem Anwender, bzw. dem Techniker in Schritt 74. Die Signalisierung erfolgt insbesondere über einen Signalton, eine Anzeige, beispielsweise ein LED. Erkennt der Signalkonverter 1 das Signal nicht so signalisiert er das dem Anwender in Schritt 76.

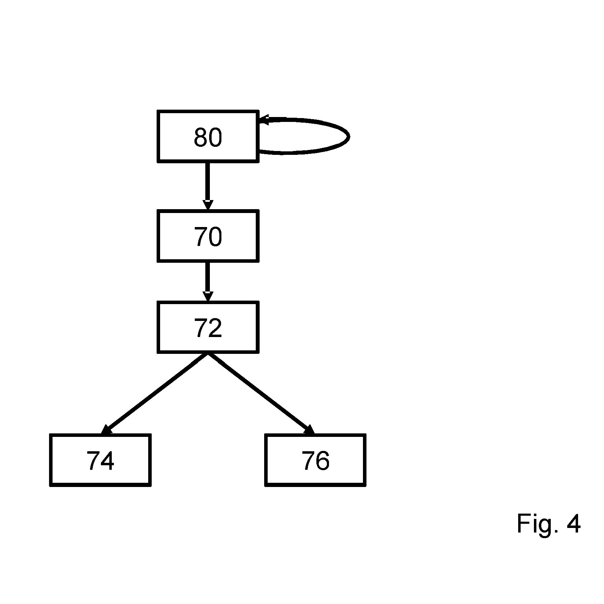

Gemäß einer weiteren Ausführungsform in Figur 4 sendet der Signalkonverter 1, insbesondere das Kommunikationsmittel 3 des Signalkonverters 1 Initialisierungssignale. Insbesondere nach der Aktivierung des Signalkonverters sendet der Signalkonverter 1, bzw. das Kommunikationsmittel 3 des Signalkonverters 1 in Schritt 80 ein Initialisierungssignal. Die Initialisierungssignal dient zur Erkennung von mit ihm verbundenen Systemkomponenten 30, 50. Der Signalkonverter 1, insbesondere das Kommunikationsmittel 3 des Signalkonverters 1 wiederholt Schritt 80 mit Initialisierungssignal basierend auf unterschiedlichen Übertragungsprotokollen bis er ein Signal einer Systemkomponente 30, 50 oder eines weiteren Signalkonverters 1 empfängt. Normalerweise weist zur Initialisierung eines Systems, bzw. der mit ihm verbundenen Komponenten jedes Übertragungsprotokoll ein Initialisierungssignal auf. Empfängt ein Systemkomponente 30, 50 ein Signal, basierend auf dem von ihr verwendeten Übertragungsprotokoll, sendet es einem Antwortsignal an den Signalkonverter 1, insbesondere das Kommunikationsmittel 3 des Signalkonverters 1 zurück. Der Signalkonverter 1, insbesondere das Erkennungsmittel 25 des Signalkonverters 1 kann nun automatisch in Schritt 70 erkennen über welches Übertragungsprotokoll die Systemkomponente 30, 50, die das Antwortsignal gesendet hat, kommuniziert. Vorzugsweise legt der Signalkonverter 1, insbesondere das Erkennungsmittel 25 des Signalkonverters 1 die erkannten Übertragungsprotokolle zusammen mit weiteren Informationen zu dem Systemkomponenten 30, 50 in einem Speicher in dem Signalkonverter 1 ab. Der weitere Ablauf erfolgt in den Schritten 72, 74, 76 gemäß der Figur 3.

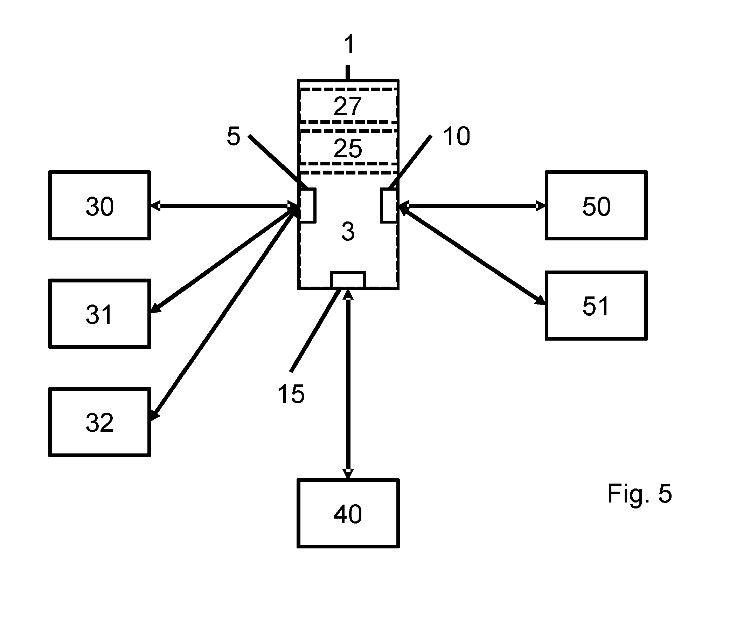

Erfindungsgemäß ist der Signalkonverter 1 nicht auf die Kommunikation mit zwei Systemkomponenten 30, 50 und zwei Übertragungsprotokolle beschränkt. Der Signalkonverter 1 kann insbesondere mit beliebig vielen Systemkomponenten 30, 50 kommunizieren und die Signale zwischen den Systemkomponenten konvertieren. In Figur 5 ist beispielhaft ein Signalkonverter 1 mit sechs Systemkomponenten 30, 31, 32, 40, 50, 51 verbunden, insbesondere kommuniziert mit diesen. Die Systemkomponenten 30, 31, 33 kommunizieren, insbesondere senden und empfangen Signale basierend auf dem gleichen, insbesondere einem ersten Übertragungsprotokoll. Die Systemkomponente 40 kommuniziert mittels Signale basierend auf einem dritten Übertragungsprotokoll. Die Systemkomponenten 50, 51 kommunizieren, insbesondere senden und empfangen Signale basierend auf dem gleichen, insbesondere zweiten Übertragungsprotokoll. Der Signalkonverter 1, insbesondere das Kommunikationsmittel 3 der Signalkonverter 1 stellt für jedes Übertragungsprotokoll eine eigene Schnittstelle 5, 10, 15 zur Verfügung. Die Kommunikation mittels des ersten Übertragungsprotokolls erfolgt über die erste Schnittstelle 5. Die Kommunikation mittels des zweiten Übertragungsprotokolls erfolgt über die zweite Schnittstelle 10. Die Kommunikation mittels des dritten Übertragungsprotokolls erfolgt über die dritte Schnittstelle 10. Der Signalkonverter 1, insbesondere das Erkennungsmittel 25 der Signalkonverter 1 erkennt automatische, wie bereits zuvor erläutert, bei Verbindung der Systemkomponenten das verwendete Übertragungsprotokoll und signalisiert die erfolgreiche Erkennung dem Anwender. Anschließend übersetzt, bzw. konvertiert der Signalkonverter 1, insbesondere das Konvertierungsmittel 27 des Signalkonverters 1 die Signale zwischen den einzelnen Systemkomponenten 30, 31, 32, 40, 50, 51 wie bereits zuvor erläutert.

Die Systemkomponenten 30, 31, 32 könnten beispielsweise Raumsteuerungselemente oder ein Anzeigesystem sein. Die Systemkomponente 50 könnte beispielsweise eine Klimaanlage und die Systemkomponente 51 eine Heizung sein. Die Systemkomponente 40 könnte beispielsweise ein Sensor oder ein Smartphone sein. Durch den Signalkonverter 1 können die einzelnen Systemkomponenten 30, 31, 32, 40, 50, 51 miteinander kommunizieren. Beispielsweise kann der Sensor 40 die Temperatur ermitteln und entsprechend die Heizung oder die Klimaanlage steuern. Der Sensor 40 kann jedoch auch die ermittelte Information an einen Systemkomponente 30, insbesondere eine Temperaturanzeige senden.

Es ist auch möglich, dass der Signalkonverter 1 mit einem weiteren Signalkonverter 1 kommuniziert oder insbesondere in Netzwerken mit Stern oder Ring Topologie verwendet wird.

Auch können gemäß einem weiteren Ausführungsbeispiel mehrere Signalkonverter 1 in Reihe oder parallel miteinander verbunden werden, bzw. miteinander kommunizieren. Die Signalkonverter 1, insbesondere die Kommunikationsmittel 3 der Signalkonverter 1 wählen bei der Kommunikation untereinander ein vorher definiertes priorisiertes Übertragungsprotokoll aus.

Gemäß einem weiteren Ausführungsbeispiel erfolgt die Konvertierung des ersten Signals 20 in ein zweites Signal 22 in Echtzeit. Es kommt somit nur zu minimalen Verzögerungen durch die Konvertierung. Vorzugsweise werden die Signale in dem Signalkonverter 1 nicht gespeichert sondern sofort konvertiert.

Gemäß einer weiteren Ausführungsform signalisiert der Signalkonverter 1 das Herstellen einer Verbindung zwischen mindestens zwei Systemkomponenten 30, 50 mit unterschiedlichem Übertragungsprotokoll. Hat er somit die Übertragungsprotokolle erkannt und kann die Signale zwischen diesen konvertieren signalisiert das der Signalkonverter 30 insbesondere akustisch oder optisch.

Gemäß einer weiteren Ausführungsform kann der Signalkonverter 1 beliebig viele Übertragungsprotokolle erlernen. Ferner kann der Signalkonverter 1, insbesondere das Kommunikationsmittel 3 des Signalkonverters 1 um Hardwareschnittstellen ergänzt werden. Die neuen Hardwarschnittstellen, insbesondere Funkschnittstellen oder kabelgebundene Schnittstellen können mittels Kommunikationsmodule, insbesondere USB-Module mit einem Kommunikationsmittel 3 des Signalkonverters 1 verbunden werden. Die neuen Hardwareschnittstellen ermögliche es dem Signalkonverter 1 auch über zukünftige Bussysteme oder Verbindungen, insbesondere drahtlose oder kabelgebundene Verbindungen mit zukünftigen Systemkomponenten zu kommunizieren.

Ferner kann der Signalkonverter 1 mittels Updates, insbesondere der Hardware oder Firmware neu Übertragungsprotokoll erlernen. Der Signalkonverter 1 kann somit auch für zukünftige Heimautomatisierungssysteme verwendet werden. Gemäß einer weiteren Ausführungsform sendet der Signalkonverter 1 das empfangene Signal als konvertiertes Signal, basierend auf dem Übertragungsprotokoll jeder Schnittstelle über alle Schnittstellen an alle Systemkomponenten.

Gemäß einer weiteren Ausführungsform sendet der Signalkonverter 1 die Signale nach der Konvertierung gezielt an Systemkomponenten 30, 31, 32, 40, 50, 51, für die das Signal bestimmt ist. Der Signalkonverter 1 dekodiert die Adressinformation aus dem empfangenen Signal. Und generiert ein Signal basierend auf dem Übertragungsprotokoll des Empfängers. Der Signalkonverter 1 sendet das generierte Signal nur über die Schnittstelle, die in Verbindung mit der Empfänger-Systemkomponente steht.

## Patentansprüche

1. Signalkonverter (1) für ein Heimautomatisierungssystem und/oder HVAC-Systeme, wobei der Signalkonverter (1) Signale (20, 22) basierend auf mindestens einem Übertragungsprotokoll verarbeiten, insbesondere senden und empfangen, kann, wobei der Signalkonverter (1) erste Signale (20) basierend auf einem ersten Übertragungsprotokoll in zweite Signale (22) basierend auf einem zweiten Übertragungsprotokoll und umgekehrt konvertieren kann, **dadurch gekennzeichnet, dass** der Signalkonverter (1) ein Erkennungsmittel (25) aufweist, das automatisch das Übertragungsprotokoll der Signale (20, 22), insbesondere das Übertragungsprotokoll der ersten Signale (20) und das Übertragungsprotokoll der zweiten Signale (22) erkennt.

2. Signalkonverter (1) für ein Heimautomatisierungssystem und/oder HVAC-Systeme gemäß dem vorhergehenden Anspruch, **dadurch gekennzeichnet, dass** der Signalkonverter (1) ein Konvertierungsmittel (27) aufweist, das die Konvertierung der Signale (20, 22) entsprechend der erkannten Übertragungsprotokolle automatisch durchführen kann.

3. Signalkonverter (1) für ein Heimautomatisierungssystem und/oder HVAC-Systeme gemäß einem der vorhergehenden Ansprüche, **dadurch gekennzeichnet, dass** der Signalkonverter (1) ein Kommunikationsmittel (3) aufweist, das die Signale (20, 22) basierend auf den erkannten Übertragungsprotokollen empfangen und senden kann.

4. Signalkonverter (1) für ein Heimautomatisierungssystem und/oder HVAC-Systeme gemäß einem der vorhergehenden Ansprüche, **dadurch gekennzeichnet, dass** der Signalkonverter (1) drahtgebunden und/oder drahtlos mit mindestens einer Systemkomponente (30, 40, 50) verbunden ist und insbesondere mittels Signalen (20, 22) basierend auf mindestens einem Übertragungsprotokoll mit der Systemkomponente (30, 40, 50) kommunizieren kann.

5. Signalkonverter (1) für ein Heimautomatisierungssystem und/oder HVAC-Systeme gemäß einem der vorhergehenden Ansprüche, **dadurch gekennzeichnet, dass** der Signalkonverter (1) mindestens eine Schnittstelle (5, 10, 15) je Übertragungsprotokoll aufweist und der Signalkonverter (1) über die Schnittstellen (5, 10, 15) Signale (20, 22), insbesondere basierend auf dem Übertragungsprotokoll empfangen und senden kann.

6. Signalkonverter (1) für ein Heimautomatisierungssystem und/oder HVAC-Systeme gemäß dem vorhergehenden Anspruch, **dadurch gekennzeichnet, dass** der Signalkonverter (1) über die Schnittstelle (5, 10, 15) mit einem Steuerungs- und/oder Kommunikationsbus verbunden ist, wobei der Signalkonverter (1) Signale (20, 22) über den Steuerungs- und/oder Kommunikationsbus übertragen kann.

7. Signalkonverter für ein Heimautomatisierungssystem und/oder HVAC-Systeme gemäß dem vorhergehenden Anspruch, **dadurch gekennzeichnet, dass** das Übertragungsprotokoll der Signale von dem Steuerungs- und/oder Kommunikationsbus abhängig ist.

8. Signalkonverter (1) für ein Heimautomatisierungssystem und/oder HVAC-Systeme gemäß einem der vorhergehenden Ansprüche, **dadurch gekennzeichnet, dass** es sich bei den Signalen (20, 22) um Steuersignale, zur Steuerung einer Systemkomponente (30, 40, 50), insbesondere eines Aktorsystems handelt.

9. Signalkonverter (1) für ein Heimautomatisierungssystem und/oder HVAC-Systeme gemäß einem der vorhergehenden Ansprüche, **dadurch gekennzeichnet, dass** es sich bei den Signalen (20, 22) um Kommunikationssignale, insbesondere zur Übermittelung von Informationen von ersten Systemkomponente (30, 40, 50) zu einer zweiten Systemkomponente (30, 40, 50) und umgekehrt, handelt.

10. Signalkonverter (1) für ein Heimautomatisierungssystem und/oder HVAC-Systeme gemäß einem der vorhergehenden Ansprüche, **dadurch gekennzeichnet, dass** der Signalkonverter (1), insbesondere optisch oder akustisch, signalisiert, insbesondere signalisieren kann, wenn ein Übertragungsprotokoll erkannt wurde.

11. Signalkonverter (1) für ein Heimautomatisierungssystem und/oder HVAC-Systeme gemäß einem der vorhergehenden Ansprüche, **dadurch gekennzeichnet, dass** der Signalkonverter (1) die Version der Übertragungsprotokolle ermitteln kann, und die Konvertierung abhängig von dem Übertragungsprotokoll anpasst.
